# EUROPÄISCHE PATENTSCHRIFT

(11) **EP 3 456 462 B1**
(45) Veröffentlichungstag und Bekanntmachung des Hinweises auf die Patenterteilung: **19.03.2025**
(21) Anmeldenummer: 18194741.7
(22) Anmeldetag: 17.09.2018
(51) Int. Cl.: B23Q 1/01, B23Q 5/38, B23Q 5/40

(54) **WERKZEUGMASCHINE ZUR BEARBEITUNG EINES WERKSTÜCKS**
MACHINE TOOL FOR PROCESSING A WORKPIECE
MACHINE-OUTIL DESTINÉE À L'USINAGE D'UNE PIÈCE USINÉE

(30) Priorität: 17.09.2017 DE 102017216446
(43) Veröffentlichungstag der Anmeldung: 20.03.2019
(73) Patentinhaber: DMG MORI Seebach GmbH, 99846 Seebach (DE)
(72) Erfinder: SUCKERT, Fabian, 99084 Erfurt (DE); ENGEL, André, 98596 Brotterode (DE); PETSCH, René, 99867 Gotha (DE)
(74) Vertreter: MERH-IP Matias Erny Reichl Hoffmann Patentanwälte PartG mbB

(56) Entgegenhaltungen:
- CN-A- 102 528 090
- CN-A- 104 723 155
- DE-B- 1 112 376
- DE-U1- 20 019 035
- JP-A- H1 015 769
- JP-U- H0 560 748
- US-A1- 2005 031 429

## Beschreibung

Die vorliegende Erfindung betrifft eine Werkzeugmaschine zur Bearbeitung eines Werkstücks.

### HINTERGRUND DER ERFINDUNG

Einen der wesentlichsten Bestandteile einer Werkzeugmaschine, insbesondere mit einer werkzeugtragenden Arbeitsspindel, stellt die werkzeugtragende Bearbeitungseinheit dar. Ihr kommt eine bedeutende Aufgabe für die Genauigkeit der zu fertigenden Teile zu, da sie direkt am Werkstück mittels des von der werkzeugtragenden Bearbeitungseinheit tragenden Werkzeug die materialabtragenden Prozesse durchführt. Daher ist es im besonderen Maße wichtig, dass die werkzeugtragende Bearbeitungseinheit die durch vorgegebene Parameter beschriebene Kontur möglichst genau auf das Werkstück appliziert.

In der Regel sind hierfür im Wesentlichen numerisch steuerbare Achsen verantwortlich, die über eine entsprechende Genauigkeit und Reproduzierbarkeit verfügen. Jedoch müssen z.B. je nach Umgebungsbedingung, Gewicht des Werkstücks, etc. die die Achsen steuernden Parameter entsprechend korrigiert werden.

Einen erheblichen Einfluss auf das "Ausmaß" der Korrektur der steuernden Parameter kann zudem der Aufbau der Werkzeugmaschine selbst haben, z.B. wenn sich Massen innerhalb der Werkzeugmaschine durch Zustellung der numerisch steuerbaren Achsen verlagern. Dies kann zu größeren Abweichungen der realen Position des in der Arbeitsspindel aufgenommenen Werkzeugs der Bearbeitungseinheit führen, wobei diese Abweichungen teils nur schwer mithilfe komplexer Bahnkorrekturen der numerisch steuerbaren Achsen korrigiert werden können.

Aus der US 2005/031429 A1, welche die Basis für den Oberbegriff des Anspruchs 1 darstellt, der CN 102 528 090 A, der CN 104 723 155 A und der JP H10 15769 A sind Werkzeugmaschinen bekannt, die zum Verfahren der Arbeitsspindel in vertikaler Richtung zwei Antriebe mit Gewindetrieb aufweisen, wobei beim Verfahren der Arbeitsspindel in vertikaler Richtung die Antriebe und die Gewindetriebe ihre relative Lage gegenüber der Arbeitsspindel ändern.

Aus der DE 11 12 376 B und der JP H05 60748 U sind Werkzeugmaschinen bekannt, die zum Verfahren der Arbeitsspindel in vertikaler Richtung einen Antrieb mit Gewindetrieb aufweisen, wobei beim Verfahren der Arbeitsspindel in vertikaler Richtung der Antrieb seine relative Lage gegenüber der Arbeitsspindel ändert.

Zudem ist aus der DE 200 19 035 U1 eine Werkzeugmaschine bekannt, die zwei Zahnstangen zum Verfahren der Arbeitsspindel in vertikaler Richtung aufweist, wobei die Arbeitsspindel zusätzlich um eine Schwenkachse geschwenkt werden kann.

### ZUSAMMENFASSUNG DER ERFINDUNG

Eine Aufgabe der vorliegenden Erfindung ist es daher, eine Werkzeugmaschine bereitzustellen, mit der das obige Problem vermieden werden kann, insbesondere so dass eine erleichterte Bahnkorrektur ermöglicht und gleichzeitig die Genauigkeit des Bearbeitungsprozesses verbessert wird.

Zur Lösung dieser Aufgabe wird erfindungsgemäß eine Werkzeugmaschine zur Bearbeitung eines Werkstücks nach den Anspruch 1 vorgeschlagen. Die abhängigen Ansprüche beziehen sich auf vorteilhafte Ausführungsbeispiele der erfindungsgemäßen Werkzeugmaschine.

Die erfindungsgemäße Werkzeugmaschine zur Bearbeitung eines Werkstücks wird in Anspruch 1 definiert.

Durch den erfindungsgemäßen Aufbau der Werkzeugmaschine, den Schwerpunkt der Bearbeitungseinheit so zu legen, dass er entweder innerhalb des Wirkpunktes der Aufhängung oder auf einer vertikal orientierten Geradenlinie liegt, die durch den Wirkpunkt verläuft, wird es ermöglicht, dass auf die vertikalen und horizontalen Führungen der Bearbeitungseinheit entweder ein vernachlässigbar geringes, z.B. bei der vertikalen Führung, oder ein konstantes Drehmoment, z.B. bei den horizontalen Führungen, wirkt, welches durch die Masse der Bearbeitungseinheit und dem Abstand zum Wirkpunkt der Aufhängung erzeugt wird.

Durch diese Maßnahme kann eine erleichterte Bahnkorrektur der entsprechenden numerisch steuerbaren Achsen vorgenommen werden, da die vertikale Position der Bearbeitungseinheit, die die auftretenden Drehmomente in den Führungen in einem konventionellen Aufbau einer Werkzeugmaschine maßgeblich beeinflusst, in einem wesentlich geringen Ausmaß dafür berücksichtigt werden muss. Insbesondere ist dies vorteilhaft, da diese konstruktive Maßnahme zu einer erhöhten geometrischen Genauigkeit bei der Zustellung der Bearbeitungseinheit und somit zu einer erhöhten Genauigkeit des bearbeiteten Werkstücks führt, da der Einfluss der Masse der Bearbeitungseinheit auf die Führungen gleichbleibend ist.

Durch die Optimierung der Aufhängung der Bearbeitungseinheit konnte ein Problem bei der Korrektur der Bahnen der verfahrenden Teile einer Werkzeugmaschine vermieden bzw. auf im Wesentlichen konstante Werte vereinfacht werden, so dass neben einer einfacheren Bahnkorrektur eine erhöhte Genauigkeit bei der Fertigung des Werkstücks erreicht werden konnte.

Der Antriebsmechanismus wird mit der Bearbeitungseinheit mitgeführt um die Masse der Bearbeitungseinheit zu erhöhen, Dadurch kann die Bearbeitungseinheit auf plötzlich auftretende Kräfte beim Bearbeitungsprozess des Werkstücks etwas träger reagieren, was wiederum das Ergebnis des Bearbeitungsprozesses positiv beeinflussen kann.

Beispielhaft kann die Werkzeugmaschine in einer vorliegend nicht beanspruchten Variante so ausgebildet sein, dass der Wirkpunkt der Aufhängung bei einem Getriebe in der Aufhängung selbst angeordnet ist.

Dadurch ist, wie auch bei mehreren Getrieben, bei denen der Wirkpunkt der Aufhängung im Wesentlichen in der Mitte von Einzelaufhängungen, die die Aufhängung bei mehreren Getrieben bilden, angeordnet ist, sichergestellt, dass der Schwerpunkt der Bearbeitungseinheit kein Drehmoment oder zumindest ein konstantes Drehmoment bei den vertikalen und horizontalen Führungen der Werkzeugmaschine erzeugt, unabhängig von der vertikalen Position der Bearbeitungseinheit.

Eine weitere vorteilhafte Weiterbildung der erfindungsgemäßen Werkzeugmaschine ist, dass die Bearbeitungseinheit derart an den einen oder mehreren Getriebeabschnitten des zumindest zwei Getriebe des Antriebmechanismus aufgehängt ist, dass während des Verfahrens in vertikaler Richtung auf den Trägerabschnitt ein konstantes Drehmoment wirkt.

In einer nicht beanspruchten Ausführung der Werkzeugmaschine mit lediglich einem Getriebe des Antriebsmechanismus, kann die Bearbeitungseinheit ebenfalls derart an den einen oder mehreren Getriebeabschnitten des einen Getriebes aufgehängt sein, dass während des Verfahrens in vertikaler Richtung auf den Trägerabschnitt ein konstantes Drehmoment wirkt.

Ferner kann die erfindungsgemäße Werkzeugmaschine dadurch vorteilhaft weitergebildet werden, dass die Bearbeitungseinheit derart an den einen oder mehreren Getriebeabschnitten der zumindest zwei Getriebe des Antriebmechanismus aufgehängt ist, dass während des Verfahrens in vertikaler Richtung auf die zumindest eine vertikale Führung des Trägerabschnitts im Wesentlichen kein Drehmoment wirkt.

In einer nicht beanspruchten Ausführung der Werkzeugmaschine mit lediglich einem Getriebe des Antriebsmechanismus ist, kann die Bearbeitungseinheit ebenfalls derart an den einen oder mehreren Getriebeabschnitten des einen Getriebes aufgehängt sein, dass während des Verfahrens in vertikaler Richtung auf die zumindest eine vertikale Führung des Trägerabschnitts im Wesentlichen kein Drehmoment wirkt.

Beide Weiterbildungen ermöglichen ein geringeres Korrekturausmaß der numerisch gesteuerten Achsen aufgrund von veränderlichen Lasten und Drehmomenten, welche durch die Verlagerung von Massen innerhalb der Werkzeugmaschine, insbesondere durch die der Bearbeitungseinheit, entstehen.

In einer nicht beanspruchten Variante kann der Antriebsmechanismus der Werkzeugmaschine derart angeordnet sein, dass der Antriebsmechanismus während des Verfahrens der Bearbeitungseinheit in vertikaler Richtung seine relative Lage zum Trägerabschnitt beibehält und die relative Lage des Wirkpunktes der Aufhängung zu der Bearbeitungseinheit im Wesentlichen konstant bleibt.

In einer weiteren, nicht beanspruchten Variante der Werkzeugmaschine können sowohl der Antriebsmechanismus als auch der Wirkpunkt der Aufhängung derart angeordnet sein, dass sie während des Verfahrens der Bearbeitungseinheit in vertikaler Richtung ihre relative Lage zum Trägerabschnitt beibehalten.

In einer weiteren, nicht beanspruchten Variante der Werkzeugmaschine können sowohl der Antriebsmechanismus als auch der Wirkpunkt der Aufhängung derart angeordnet sein, dass sie während des Verfahrens der Bearbeitungseinheit in vertikaler Richtung ihre relative Lage zur Bearbeitungseinheit beibehalten.

Die genannten Ausgestaltungsmöglichkeiten der Aufhängung und der Positionierung des Antriebsmechanismus sollen als beispielhafte Varianten verstanden sein, die je nach Anwendungsfall und Anforderungen an die Werkzeugmaschine Anwendung finden können.

Ein Vorteil kann zum Beispiel sein, dass der Antrieb des Antriebsmechanismus, der zugleich eine Wärmequelle darstellt, am Träger bzw. Trägerabschnitt der Bearbeitungseinheit verbleibt, während der Wirkpunkt bzw. ein Aufhängungspunkt der Aufhängung mit der Bearbeitungseinheit verfahren wird. Hierdurch kann vorteilhafterweise eine Wärmequelle (Antrieb des Antriebsmechanismus) aus dem zum Werkstück näheren Bearbeitungsbereich herausgehalten werden, so dass die Erwärmung des Antriebs den Bearbeitungsprozess nur noch geringfügig beeinflussen würde.

Die erfindungsgemäße Werkzeugmaschine kann vorteilhaft dadurch weitergebildet werden, dass während des Verfahrens der Bearbeitungseinheit der Wirkpunkt der Aufhängung und/oder der Schwerpunkt der Bearbeitungseinheit sich entlang der vertikal orientierten Geradenlinie bewegen.

Dadurch kann sichergestellt werden, dass sich, unabhängig von der vertikalen Position der Bearbeitungseinheit, die Verhältnisse der wirkenden Drehmomente an den Führungen der Bearbeitungseinheit nicht sonderlich ändern. Ferner kann dadurch der Korrekturaufwand der numerisch steuerbaren Achsen deutlich reduziert werden.

Zudem kann die erfindungsgemäße Werkzeugmaschine dadurch vorteilhaft weitergebildet werden, dass der Antriebsmechanismus als selbst-sperrender Antriebsmechanismus ausgebildet ist.

Durch einen selbst-sperrenden Antriebsmechanismus ist es möglich, die Bearbeitungseinheit entlang der vertikalen Achse zu positionieren, wobei keine weiteren Sicherungsmaßnahmen und Arretierungen in dieser Position nötig sind, da der Antriebsmechanismus, ohne durch den Antrieb bewegt zu werden, keine weitere Verstellung der Position der Bearbeitungseinheit zulässt.

Die erfindungsgemäße Werkzeugmaschine kann zudem dadurch vorteilhaft weitergebildet werden, dass der Antriebsmechanismus zumindest einen Gewindetrieb, vorzugsweise zumindest einen Kugelgewindetrieb umfasst.

Als eine Umsetzung eines selbst-sperrenden Antriebsmechanismus ist ein Gewindetrieb bekannt, der Aufgrund einer entsprechenden Gewindesteigung nur dann eine Verstellung der vertikalen Position der Bearbeitungseinheit zulässt, wenn das Gewinde tragende Element (Gewindeelement, z.B. eine Gewindestange mit Kugelgewinde, Trapezgewinde oder einer anderen Gewindeform) durch einen elektrischen, pneumatischen oder hydraulischen Antrieb entsprechend angetrieben wird.

Eine vorteilhafte Weiterbildung der erfindungsgemäßen Werkzeugmaschine besteht darin, dass bei einem Getriebe die zumindest eine vertikale Führung der Bearbeitungseinheit derart angeordnet ist, dass der Schwerpunkt der Bearbeitungseinheit beim Verfahren der Bearbeitungseinheit in vertikaler Richtung im Wesentlichen konzentrisch zu einer Gewindestange des Gewindetriebes verschoben wird, insbesondere entlang der vertikal orientierten Geradenlinie.

Ferner kann die erfindungsgemäße Werkzeugmaschine dadurch vorteilhaft weitergebildet werden, dass die Gewindestange axial mit der vertikal orientierten Geradenlinie angeordnet ist.

Sollte der Antriebsmechanismus z.B. über einen Antrieb und ein Getriebe zum Verfahren der Bearbeitungseinheit entlang der vertikalen Richtung verfügen, so kann es überaus vorteilhaft sein, den Schwerpunkt der Bearbeitungseinheit direkt in den Punkt der Aufhängung (Aufhängungspunkt) zu legen. Grund dafür ist, dass der Schwerpunkt nun direkt im Querschnitt der Gewindestange liegen würde, was somit zum einen die Gewindestange ausschließlich auf Zug oder Druck belasten würde und gleichzeitig die vertikale Führung der Bearbeitungseinheit im Wesentlichen von der Aufnahme eines Drehmomentes, dass aufgrund des Abstandes des Schwerpunktes der Bearbeitungseinheit zur Führungslinie der Führungen erzeugt wird, befreien würde. Hierdurch kann ein deutlich präziseres Führen der Bearbeitungseinheit in vertikaler Richtung ermöglicht werden, da die auf die Führung lastenden Kräfte erheblich verringert werden.

Die erfindungsgemäße Werkzeugmaschine kann dadurch vorteilhaft weitergebildet werden, dass der Antriebsmechanismus zumindest eine Zahnrad-Zahnstangen-Kombination, vorzugsweise zumindest eine schrägverzahnte Zahnrad-Zahnstangen-Kombination umfasst.

Weiterhin kann der Antriebsmechanismus in Form einer Zahnstange mit entsprechend antreibendem Zahnrad ausgeführt sein, wobei diese Ausführungsform nicht die selbst-sperrenden Eigenschaften eines Gewindetriebes aufweist.

Weiterhin kann die erfindungsgemäße Werkzeugmaschine dadurch vorteilhaft weitergebildet werden, dass bei einem Getriebe die zumindest eine vertikale Führung der Bearbeitungseinheit derart angeordnet ist, dass der Schwerpunkt der Bearbeitungseinheit beim Verfahren der Bearbeitungseinheit in vertikaler Richtung im Wesentlichen am Kontaktpunkt von Wälzkreis des Zahnrades und Wälzgerade der Zahnstange geführt wird.

An dieser Stelle verhält es sich sehr ähnlich zu der Gewindestange, so dass es überaus vorteilhaft sein kann, wenn der Antriebsmechanismus z.B. über einen Antrieb und ein Getriebe zum Verfahren der Bearbeitungseinheit entlang der vertikalen Richtung verfügt, den Schwerpunkt der Bearbeitungseinheit direkt in den Punkt der Aufhängung (Aufhängungspunkt ist hier der Kontaktpunkt zwischen dem Wälzkreis des Zahnrades und der Wälzgeraden der Zahnstange) zu legen. Hier würde die Zahnstange ausschließlich auf Zug oder Druck belastet werden und gleichzeitig die vertikale Führung der Bearbeitungseinheit im Wesentlichen von der Aufnahme eines Drehmomentes, dass aufgrund des Abstandes des Schwerpunktes der Bearbeitungseinheit zur Führungslinie der Führungen erzeugt wird, befreit werden. Hierdurch kann ein deutlich präziseres Führen der Bearbeitungseinheit in vertikaler Richtung ermöglicht werden, da die auf die Führung lastenden Kräfte erheblich verringert werden.

Die erfindungsgemäße Werkzeugmaschine kann dadurch vorteilhaft weitergebildet werden, dass die Bearbeitungseinheit einen eine Arbeitsspindel tragenden Spindelträger umfasst.

Zudem kann die erfindungsgemäße Werkzeugmaschine dadurch vorteilhaft weitergebildet werden, dass der Spindelträger eine Schwenkvorrichtung zum Schwenken der Arbeitsspindel um eine Schwenkachse umfasst.

Hierdurch ermöglichen sich für die Arbeitsspindel der Bearbeitungseinheit vielseitige Anwendungsmöglichkeiten, da sie durch den Spindelträger in einem breiten Winkelbereich, z.B. von +90° bis -90° zur vertikalen Ausrichtung der Arbeitsspindel, geschwenkt werden kann, wobei der Winkelbereich teilweise auch größer gewählt werden kann. Dies kann z.B. abhängig von dem Biegeverhalten der Zuleitungen der Arbeitsspindel sein.

Weiterhin kann es vorteilhaft sein, die erfindungsgemäße Werkzeugmaschine in der Art weiterzubilden, dass die Schwenkachse senkrecht oder schräg, vorzugsweise im 45°-Winkel, zu einer Spindelachse der Arbeitsspindel angeordnet ist.

Hierdurch kann die Arbeitsspindel, respektive die Werkzeugaufnahme der Arbeitsspindel, z.B. in einem Winkelbereich von 0° bis 90° geschwenkt werden (z.B. bei einer um 45° zur Spindelachse angestellten Schwenkachse).

Eine besonders vorteilhafte Weiterbildung der erfindungsgemäßen Werkzeugmaschine ergibt sich dadurch, dass ein die Arbeitsspindel haltender, schwenkbarer Abschnitt des Spindelträgers, mit dem die Arbeitsspindel um die Schwenkachse schwenkbar ist, derart angeordnet ist, dass ein gemeinsamer Schwerpunkt des schwenkbaren Abschnitts und der Arbeitsspindel im Schnittpunkt von der Schwenkachse und der vertikal orientierten Geradenlinie liegt.

Hierdurch kann besonders vorteilhaft die Arbeitsspindel bzw. ein schwenkbarer Abschnitt des Spindelträgers geschwenkt werden, ohne dass dabei eine Verlagerung des Schwerpunktes der Bearbeitungseinheit stattfindet, da sich der gemeinsame Schwerpunkt von Arbeitsspindel und schwenkbaren Abschnitt trotz des Schwenkens nicht verlagert. Hierdurch können die Einflüsse der durch bewegliche Massen der Bearbeitungseinheit erzeugten Drehmomente auf die Führungen weiterhin konstant oder vernachlässigbar gering gehalten werden.

Eine weitere vorteilhafte Weiterbildung der erfindungsgemäßen Werkzeugmaschine besteht darin, dass der Trägerabschnitt als ein auf einem Maschinenbett angeordneter Maschinenständer ausgebildet ist.

Hierdurch kann der Maschinenträger in seiner relativen Lage zu dem Maschinenbett fest ausgestaltet sein, wodurch eine Zustellung der Arbeitsspindel direkt an der Bearbeitungseinheit stattfindet.

Die erfindungsgemäße Werkzeugmaschine kann dadurch vorteilhaft weitergebildet werden, dass der Trägerabschnitt einen horizontal verfahrbar gelagerten Schlittenabschnitt umfasst.

Zudem kann die erfindungsgemäße Werkzeugmaschine dadurch vorteilhaft weitergebildet werden, dass der Schlittenabschnitt auf Führungen gelagert an einem horizontal verfahrbaren Portalaufbau einer Gantry-Werkzeugmaschine angeordnet ist.

Vorteilhafterweise lässt sich die Ausgestaltung der Aufhängung der erfindungsgemäßen Werkzeugmaschine an einem verfahrbaren Portalaufbau einer Gantry-Werkzeugmaschine anwenden.

Durch die erfindungsgemäße Werkzeugmaschine zur Bearbeitung eines Werkstücks konnten die notwendigen Korrekturen der Bahnen der jeweils geführten Elemente vereinfacht werden, da nun die Massen, die beim Zustellen der Bearbeitungseinheit bewegt werden, entweder ein konstantes Drehmoment in den Führungen erzeugen, oder in bestimmten Führungen gar ein vernachlässigbar kleines Drehmoment erzeugen, und zwar unabhängig von der vertikalen Position der Bearbeitungseinheit, welche sonst einen erheblichen Einfluss auf die wirkenden Drehmomente hatte. Dies kann vorteilhaft bei der Korrektur der Bahnen für die numerisch steuerbaren Achsen genutzt werden, was wiederum zu einer erhöhten Fertigungsgenauigkeit führt, da die geometrische Genauigkeit der Werkzeugmaschine verbessert wurde.

Weitere Aspekte und deren Vorteile als auch Vorteile und speziellere Ausführungsmöglichkeiten der vorstehend beschriebenen Aspekte und Merkmale werden aus den folgenden, jedoch in keinster Weise einschränkend aufzufassenden Beschreibungen und Erläuterungen zu den angehängten Figuren beschrieben.

### KURZBESCHREIBUNG DER FIGUREN

- Fig. 1: zeigt schematisch eine Perspektivansicht einer Ausführungsform einer erfindungsgemäßen Werkzeugmaschine;
- Fig. 2: zeigt schematisch eine Seitenansicht einer Ausführungsform der erfindungsgemäßen Werkzeugmaschine aus Fig. 1;
- Fig. 3: zeigt schematisch eine Vorderansicht einer Ausführungsform der erfindungsgemäßen Werkzeugmaschine aus Fig. 1;
- Fig.4: zeigt schematisch eine Detailansicht einer Aufhängung der Bearbeitungseinheit erfindungsgemäßen Werkzeugmaschine aus Fig. 1;
- Fig. 5: zeigt schematisch eine Detailseitenansicht einer Ausführungsform einer erfindungsgemäßen Werkzeugmaschine mit einem Gewindetrieb als Getriebe zum Verfahren der Bearbeitungseinheit;
- Fig. 6a: zeigt schematisch den Wirkpunkt der Aufhängung, wenn der Antriebsmechanismus über ein Getriebe (hier Gewindetriebe) verfügt, wobei diese Ausführung nicht unter den gültigen Anspruchssatz fällt;
- Fig. 6b: zeigt schematisch den Wirkpunkt der Aufhängung, wenn der Antriebsmechanismus über zwei Getriebe (hier Gewindetriebe) verfügt;
- Fig. 6c: zeigt schematisch den Wirkpunkt der Aufhängung, wenn der Antriebsmechanismus über drei Getriebe (hier Gewindetriebe) verfügt;
- Fig. 7a: zeigt schematisch eine Ausführungsform der erfindungsgemäßen Werkzeugmaschine mit geänderter Anordnung der vertikalen Führung; und
- Fig. 7b: zeigt schematisch eine Ausführungsform der erfindungsgemäßen Werkzeugmaschine mit geänderter Anordnung der vertikalen Führung in der Seitenansicht.

### DETAILLIERTE BESCHREIBUNG DER FIGUREN UND BEVORZUGTER

### AUSFÜHRUNGSBEISPIELE DER VORLIEGENDEN ERFINDUNG

Im Folgenden werden Beispiele bzw. Ausführungsbeispiele der vorliegenden Erfindung detailliert unter Bezugnahme auf die beigefügten Figuren beschrieben. Gleiche bzw. ähnliche Elemente in den Figuren können hierbei mit gleichen Bezugszeichen bezeichnet sein.

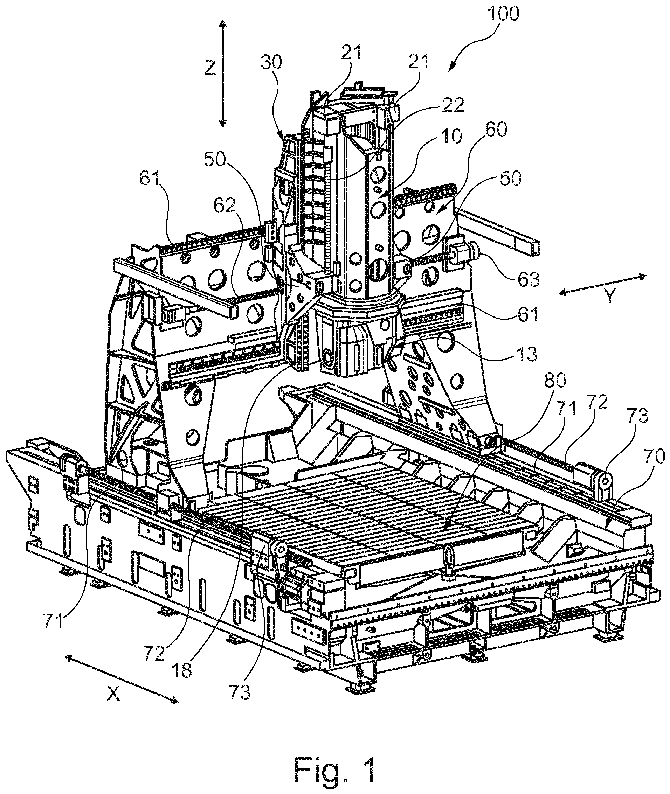

Fig. 1 zeigt beispielhaft schematisch eine Perspektivansicht einer Ausführungsform einer erfindungsgemäßen Werkzeugmaschine 100. Die Werkzeugmaschine 100 ist beispielhaft in Gantry-Bauweise aufgebaut und weist ein auf Stellfüßen aufstellbares Maschinenbett 70 auf, auf dem beispielhaft ein Werkstückeinspanntisch 80 angeordnet ist, auf dem Werkstücke zur Bearbeitung eingespannt werden können.

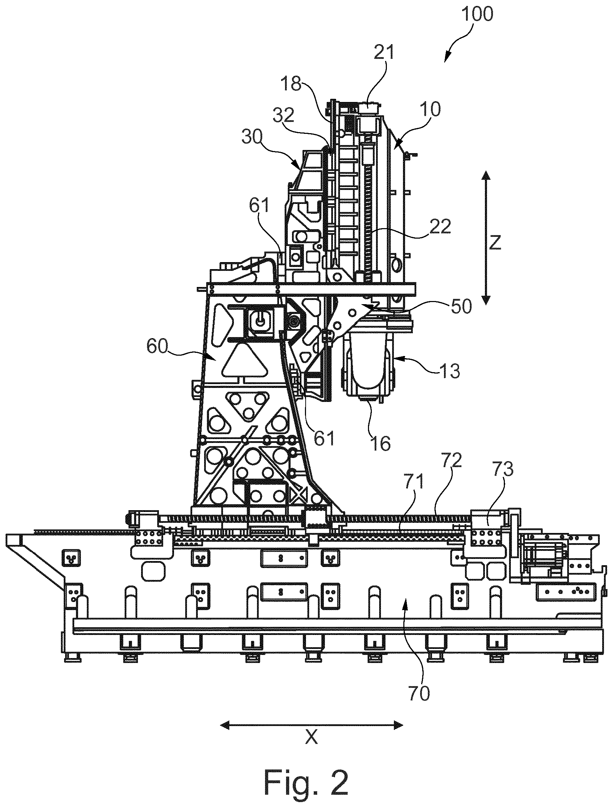

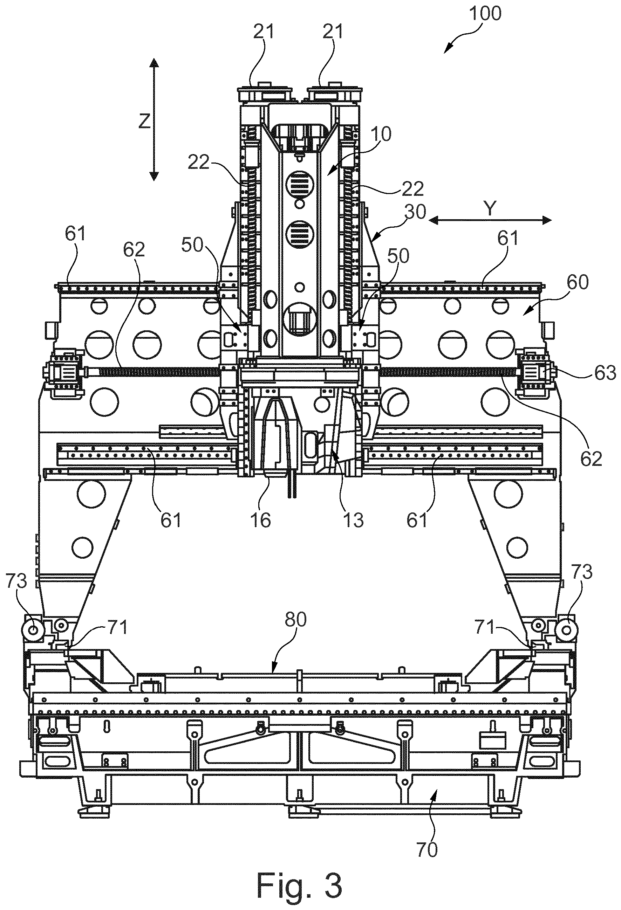

Fig. 2 zeigt beispielhaft schematisch eine Seitenansicht einer Ausführungsform der erfindungsgemäßen Werkzeugmaschine aus Fig. 1. Fig. 3 zeigt beispielhaft schematisch eine Vorderansicht einer Ausführungsform der erfindungsgemäßen Werkzeugmaschine aus Fig. 1.

An Seiten des Maschinenbetts 70 sind beispielhaft horizontale Führungen 71 horizontal in einer X-Richtung angeordnet, auf denen beispielhaft ein Portalständer 60 horizontal in der X-Richtung verfahrbar geführt ist. Zum Antreiben des horizontalen Verfahrens des Portalständers 60 sind beispielhaft an beiden Seiten parallel zu den Führungen 71 jeweilige Gewindestangen 72 angeordnet, die beispielhaft durch Antriebe 73 angetrieben werden.

An der Vorderseite des Portalständers 60 sind beispielhaft horizontale Führungen 61 horizontal in einer Y-Richtung angeordnet, auf denen beispielhaft ein Trägerabschnitt 30 horizontal in der Y-Richtung verfahrbar geführt ist. Zum Antreiben des horizontalen Verfahrens des Trägerabschnitts ist beispielhaft parallel zu den Führungen 61 eine Gewindestange 62 angeordnet, die beispielhaft durch einen Antriebe 63 angetrieben wird.

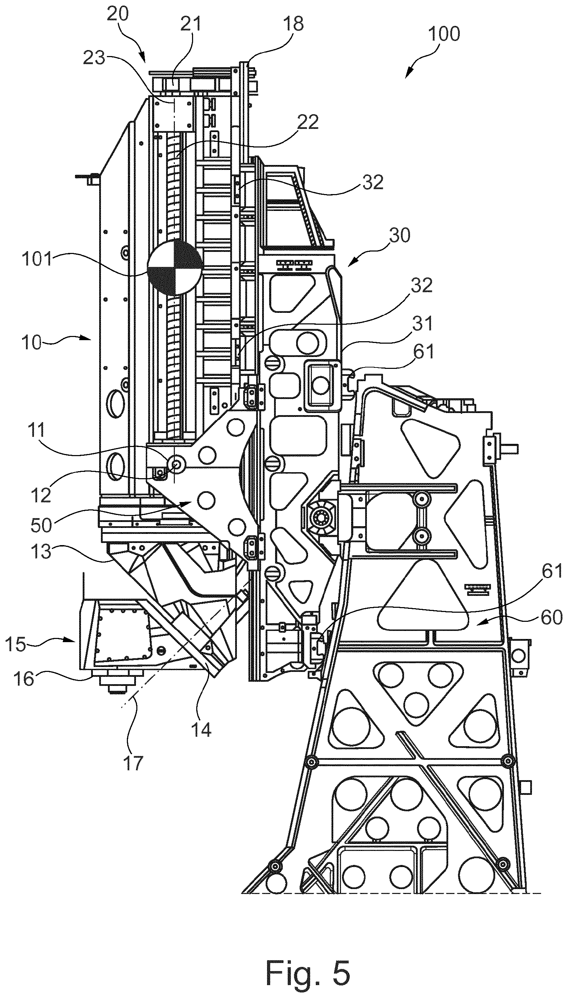

An dem Trägerabschnitt 30 ist beispielhaft eine Bearbeitungseinheit 10 in Z-Richtung vertikal verfahrbar gehalten, und an der Unterseite der Bearbeitungseinheit ist beispielhaft eine Spindelträgereinheit 13 gehalten, an der beispielhaft eine werkzeugtragende Arbeitsspindel 16 angeordnet ist. Die Spindelträgereinheit 13 ist zudem beispielhaft dazu eingerichtet, um die vertikale Achse rotiert zu werden und beispielhaft zudem weist die Spindelträgereinheit 13 weiterhin beispielhaft eine horizontale Schwenkachse auf. In einer alternativen Ausführung gemäß Fig. 5 kann die Schwenkachse auch in einem schrägen Winkel (z.B. bei 45° zur vertikalen Drehachse) geneigt sein.

Durch die Drehachse und die Schwenkachse werden zwei rotatorische Freiheitsgrade der relativen Bewegung des in der Arbeitsspindel 16 eingespannten Werkzeugs und des auf dem Werkstückeinspanntisch 80 bereitgestellt, zusätzlich zu den drei translatorischen Freiheitsgraden der vorstehend genannten X-, Y-, und Z-Achsen. Beispielhaft ist die Werkzeugmaschine 100 daher als 5-Achs-Werkzeugmaschine ausgebildet.

Die Bearbeitungseinheit 10 ist beispielhaft mittels einer vertikalen Führung 18 vertikal verfahrbar. Erfindungsgemäß ist die Bearbeitungseinheit 10 jedoch nicht über die Führung 18 an dem Trägerabschnitt 30 aufgehängt, sondern beispielhaft auf Aufhängungsabschnitten 50, die beispielhaft an dem Trägerabschnitt 30 befestigt sind. Beispielhaft sind an der Bearbeitungseinheit 10 zwei Gewindestangen 22 vertikal angeordnet, die über Antriebe 21 auf der Oberseite der Bearbeitungseinheit 10 angetrieben werden.

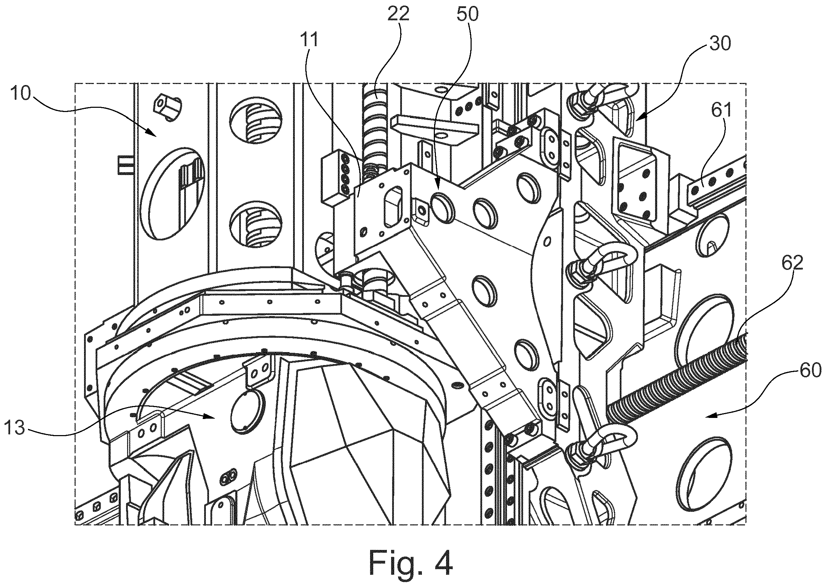

Fig. 4 zeigt beispielhaft schematisch eine Detailansicht einer Aufhängung der Bearbeitungseinheit erfindungsgemäßen Werkzeugmaschine aus Fig. 1. Beispielhaft ist die Bearbeitungseinheit 10 an Aufhängungspunkten 11 an den Aufhängungsabschnitten 50 aufgehängt, beispielhaft indem die Gewindestangen 22 an den Aufhängungspunkten 11 an den Aufhängungsabschnitten 50 aufgehängt sind.

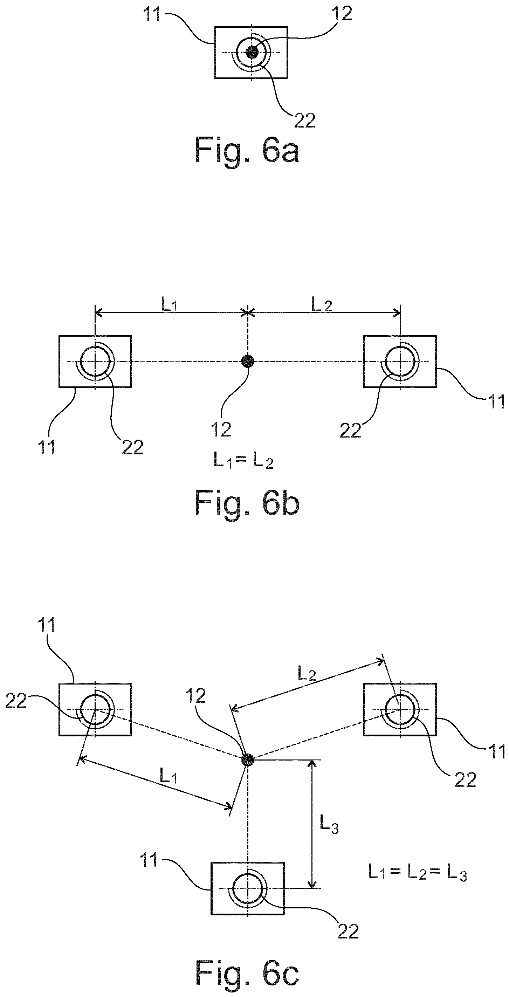

Analog zu Fig. 6b ist die Aufhängung der Bearbeitungseinheit 10 hierbei mit zwei in einer horizontalen Ebene liegenden Aufhängungspunkten 11 der beiden Aufhängungsabschnitte 50 ausgeführt, wobei der Wirkpunkt 12 der Aufhängung genau zwischen den Aufhängungspunkten 11 der beiden Aufhängungsabschnitte 50 liegt (siehe hierzu Fig. 6b). Erfindungsgemäß ist die Bearbeitungseinheit 10 derart ausgestaltet, dass der Schwerpunkt 101 der gesamten Bearbeitungseinheit 10 mit Spindelträgereinheit 13 in einer horizontalen Geradenlinie mit dem Wirkpunkt 12 der Aufhängung genau zwischen den Aufhängungspunkten 11 der beiden Aufhängungsabschnitte 50 liegt (siehe auch das Prinzip gemäß Fig. 5 und Beschreibung).

Folglich lastet das gesamte Gewicht der Bearbeitungseinheit 10 mit Spindelträgereinheit 13 unabhängig von der vertikalen Z-Position der Bearbeitungseinheit 10 stets gleichmäßig auf den beiden Aufhängungspunkten 11, an denen die Gewindestangen 22 aufgehängt sind. Dies hat den vorteilhaften Effekt, dass bei Verfahren der Bearbeitungseinheit 10 in Z-Richtung stets das gleiche Gewicht auf den Aufhängungsabschnitten 50 aufgehängt sind, und somit unabhängig von der Z-Position der Bearbeitungseinheit 10 stets das gleiche Drehmoment über die Aufhängungsabschnitte 50 auf den Trägerabschnitt 30 wirkt. Die vertikale Führung 18 der Bearbeitungseinheit 10 wird hierbei an den Führungselementen 32 des Trägerabschnitts stets entlastet und an dieser Führung treten im Wesentlichen keine Drehmomente auf.

Zudem wirkt unabhängig von der Z-Position der Bearbeitungseinheit 10 stets das gleiche Drehmoment über die Aufhängungsabschnitte 50 auf den Trägerabschnitt 30, so dass auch an den horizontalen Führungen 61 des Trägerabschnitt 30 an der Vorderseite des Portalabschnitts 60 unabhängig von der Z-Position der Bearbeitungseinheit 10 stets die gleichen Drehmomente wirken, so dass die Positionsgenauigkeit einmal eingestellt werden muss (z.B. durch numerische Kompensation in der CNC-Maschinensteuerung), wobei jedoch keine Z-positionsabhängigen Kompensationen durchgeführt werden müssen, da die von dem Trägerabschnitt 30 auf den Portalabschnitt 60 wirkenden Kräfte und Drehmomente unabhängig von der Z-Position der Bearbeitungseinheit 10 sind.

Fig. 5 zeigt beispielhaft schematisch eine Detailansicht einer Ausführungsform einer erfindungsgemäßen Werkzeugmaschine 100 mit einem Gewindetrieb als Getriebe 22 zum Verfahren der Bearbeitungseinheit 10.

Dabei wird die Bearbeitungseinheit 10 beispielhaft über eine Aufhängung 11, die über eine drehbar gelagerte und durch einen Antrieb 21 antreibbare Gewindestange (hier beispielhaft als Getriebe 22) in vertikaler Richtung verstellt wird, mit dem Trägerabschnitt 30 beispielhaft derart verbunden, dass durch Drehung der Gewindestange die relative Lage der Bearbeitungseinheit 10 zu dem Trägerabschnitt 30 in vertikaler Richtung verstellt werden kann.

Dabei ist in der Ausführungsform, wie in Fig. 5, zu sehen, dass die Gewindestange beim Rotieren der Bewegung der Bearbeitungseinheit 10 in der vertikalen Richtung folgt. Das heißt, dass Antrieb 21 und Getriebe 22 des Antriebsmechanismus 20 mit der Bearbeitungseinheit 10 fest verbunden sind und die Aufhängung 11 mit dem Trägerabschnitt 30 fest verbunden ist.

Zudem ist zu sehen, dass der Schwerpunkt 101 der Bearbeitungseinheit 10 beispielhaft in Seitenansicht auf der Gewindestange liegt, wie dies in der Seitenansicht des Aufbaus der Werkzeugmaschine 100 in Fig. 5 veranschaulicht ist. Weist der Antriebsmechanismus 20 lediglich einen Antrieb 21 und ein Getriebe 22 zur vertikalen Positionierung der Bearbeitungseinheit 10 auf, so würde der Schwerpunkt 101 im Wesentlichen in der einen Gewindestange liegen, damit das gesamte Gewicht der Bearbeitungseinheit 10 gleichmäßig und Z-positionsunabhängig die Gewindestange auf Zug/Druck belastet, auch wenn keine Führung 18, 32 vorhanden wäre. Wenn zwei Gewindestangen vorgesehen sind (siehe Fig. 3), ist der Wirkpunkt 12 der Aufhängung genau zwischen den Aufhängungspunkten 11 und so würde der Schwerpunkt 101 im Wesentlichen zwischen den Gewindestangen liegen, damit das gesamte Gewicht der Bearbeitungseinheit 10 gleichmäßig und Z-positionsunabhängig die Gewindestangen auf Zug/Druck belastet, auch wenn keine Führung 18, 32 vorhanden wäre.

Dies hat den Vorteil, dass die Führung 18, 32 im erheblichen Maße entlastet wird, da bei vertikalem Verfahren der Bearbeitungseinheit 10 und bei den unterschiedlichen Positionen der Bearbeitungseinheit 10 im Wesentlichen kein Drehmoment aufgrund des Abstandes der Aufhängung 11 (zusammenfallend mit einem Wirkpunkt 12 der Aufhängung 11) zum Schwerpunkt 101 erzeugt wird. So kann die Führung 18, 32 der Bearbeitungseinheit 10 für erheblich leichtere Belastungen ausgelegt werden und/oder aber eine höhere Führungsgenauigkeit der Bearbeitungseinheit 10 über die gesamte Führungslänge während der vertikalen Positionierung der Bearbeitungseinheit 10 gewährleisten.

Durch den erfindungsgemäßen Aufbau der Werkzeugmaschine 100 erfolgt sozusagen eine Trennung zwischen Lastaufnahme und Führungsgenauigkeit. Im Gegensatz dazu werden bei einem konventionellen Aufbau die Führungsgenauigkeit und ein Großteil der Lastaufnahme von der entsprechenden Führung bewerkstelligt. Dies kann bei Verlagerung von verfahrbaren Massen bzw. Lasten entlang der Führung eine Verformung der Führung zur Folge haben, wenn zum Großteil die Lasten durch die Führung aufgenommen werden müssen. Aufgrund dessen, dass eine Führung nie unendlich steif ausgebildet werden kann, muss bei einem konventionellen Aufbau stets ein Kompromiss zwischen Führungsgenauigkeit und Lastaufnahme gefunden werden.

Durch die erfindungsgemäße Werkzeugmaschine 100 kann man einen derartigen Kompromiss weitestgehend umgehen, da die gesamte Last/Masse der Bearbeitungseinheit 10 auf dem Antriebsmechanismus 20 (respektive auf der Gewindestange des Getriebes 22, wie gezeigt in Fig. 5) lastet, und zwar so, dass der Schwerpunkt 101 der Bearbeitungseinheit 10 in der Gewindestange liegt. Dadurch wird auch das Entstehen eines Drehmomentes aufgrund des Abstandes der Aufhängung 11 (zusammenfallend mit dem Wirkpunkt 12 der Aufhängung 11) zum Schwerpunkt 101, das von der Führung 18, 32 aufgenommen werden müsste, umgangen. Hierdurch brauch die Führung 18, 32 für die vertikale Positionierung der Bearbeitungseinheit 10 nur noch deutlich geringere Lasten aufnehmen, was zu einer erheblichen Verbesserung der Führungsgenauigkeit über die gesamte Länge der Führung 18, 32 führt.

Neben dem Aufbau des Antriebsmechanismus 20 mit einem Antrieb 21 und einem Getriebe 22 können zum Beispiel auch zwei oder mehr Antriebe 21 und entsprechend zwei oder mehr Getriebe 22 für die vertikale Positionierung der Bearbeitungseinheit 10 vorhanden sein. Dies würde dazu führen, dass der Wirkpunkt 12 der Aufhängung 11 im Wesentlichen in der Mitte der entsprechenden Verteilung der Aufhängungen 11 (siehe zum Beispiel Fig. 6b und 6c) liegt. Der Schwerpunkt 101 der Bearbeitungseinheit 10 würde dann so positioniert sein, dass der Schwerpunkt 101 der Bearbeitungseinheit 10 und der Wirkpunkt 12 der Aufhängung 11 eine gemeinsame vertikal orientierte Geradenlinie 23 haben. Entlang dieser vertikal orientierten Geradenlinie 23 kann sich dann der Schwerpunkt 101 der Bearbeitungseinheit 10 während der vertikalen Positionierung der Bearbeitungseinheit 10 bewegen, ohne dass dabei ein wesentliches Drehmoment aufgrund eines Abstandes der vertikal orientierten Geradenlinie 23 zum Schwerpunkt 101 entstehen würde, welches von der Führung 18, 32 aufgenommen werden müsste.

Die Werkzeugmaschine 100 kann aber auch in der Art aufgebaut sein, dass der Antriebsmechanismus 20 mit mindesten einem Antrieb 21 und mindestens einem Getriebe 22 am Trägerabschnitt 30 befestigt ist, so dass die Aufhängung 11 an der Bearbeitungseinheit 10 befestigt ist und bei einer vertikalen Positionierung der Bearbeitungseinheit 10 mit der Bearbeitungseinheit 10 verfährt. Eine solche Ausführung fällt nicht unter den gültigen Anspruchssatz.

Neben der Ausgestaltung den Antriebsmechanismus 20 mit einer Gewindestange, kann der Antriebsmechanismus 20 auch als eine Kombination aus Zahnstange und Zahnrad ausgeführt sein. Hierbei würde ein Antrieb 21 (z.B. elektrisch, hydraulisch oder pneumatisch) das Zahnrad in Rotation versetzen und dadurch die Zahnstange entsprechend translatorisch bewegen.

Ein wesentlicher Unterschied zur Ausführung des Antriebsmechanismus 20 mit der Gewindestange ist dabei, dass sowohl der Antriebsmechanismus 20 als auch der Wirkpunkt 12 der Aufhängung 11, der in diesem Fall der Kontaktpunkt zwischen dem Wälzkreis des Zahnrades und der Wälzgeraden der Zahnstange ist, entweder ihre relative Lage zum Trägerabschnitt 30, dann ist der Antriebsmechanismus 20 am Trägerabschnitt 30 befestigt, oder zur Bearbeitungseinheit 10, dann ist der Antriebsmechanismus 20 an der Bearbeitungseinheit 10 befestigt, beibehalten.

Weiterhin weist die Bearbeitungseinheit 10 einen Spindelträger 13 auf, an dem eine Arbeitsspindel 16 vorgesehen ist. Mit dieser kann durch Zustellung der Bearbeitungseinheit 10 ein eingespanntes Werkstück, was z.B. auf einem Maschinentisch oder auf bzw. in einer anderen Vorrichtung eingespannt ist, entsprechend eines Programmes für die Steuerung der numerisch steuerbaren Achsen der Werkzeugmaschine 100 bearbeitet werden.

Ferner kann der Spindelträger 13 eine Schwenkvorrichtung 14 aufweisen, mit dieser ein schwenkbarer Abschnitt 15 des Spindelträgers 13, in dem die Arbeitsspindel 16 vorgesehen ist, entsprechend einer Schwenkachse 17 geschwenkt werden.

Dabei kann die Schwenkachse 17 dem schwenkbaren Abschnitt 15 des Spindelträgers 13 ermöglichen, in einem Winkelbereich von +90 ° bis -90 ° geschwenkt zu werden. Eine weitere Ausführung der Schwenkvorrichtung 14 mit einer entsprechenden Schwenkachse 17 kann sein, dass die Schwenkachse 17 in einem Winkel von vorzugsweise 45° zur vertikal orientierten Geradenlinie 23 bzw. zur Spindelachse der Arbeitsspindel 16 ausgerichtet ist. Hierdurch kann die Spindelachse der Arbeitsspindel 16, die in dem schwenkbaren Abschnitt 15 des Spindelträgers 13 vorgesehen ist, in einem Winkelbereich von 0 ° bis 90 ° geschwenkt werden.

Besonders vorteilhaft kann die Schwenkachse 17 derart ausgerichtet sein, dass der gemeinsame Schwerpunkt von Arbeitsspindel 16 und schwenkbaren Abschnitt 15 des Spindelträgers 13 im Schnittpunkt der Schwenkachse 17 mit der vertikal orientierten Geradenlinie 23 angeordnet ist. Hierdurch kann die Arbeitsspindel 16 um die Schwenkachse 17 geschwenkt werden, ohne dass es dabei zu einer Verlagerung des gemeinsamen Schwerpunktes von Arbeitsspindel 16 und schwenkbaren Abschnitt 15 des Spindelträgers 13 und somit zur Verlagerung des Schwerpunktes (Gesamtschwerpunktes) der Bearbeitungseinheit 10 kommt.

Die Bearbeitungseinheit 10 wird, wie in dem Ausführungsbeispiel in Fig. 5 gezeigt, durch eine Führung 18, 32 mit im Querschnitt rechteckigen Führungsschienen 18 geführt. Dabei sind die Führungsschienen 18 mit der Bearbeitungseinheit 10 fest verbunden, so dass diese einer vertikalen Positionierung der Bearbeitungseinheit 10 folgen. Führungsschlitten 32, die mit dem Trägerabschnitt 30 fest verbunden sind, gewährleisten eine sichere und präzise Führung der Bearbeitungseinheit 10 relativ zu dem Trägerabschnitt 30.

Die Ausgestaltung der Führung 18, 32 kann dabei sehr verschieden sein. Neben einem rechteckigen Querschnitt der Führungsschienen 18 kann auch beispielsweise ein runder oder ein dreieckiger Querschnitt für die Führungsschienen 18 von Vorteil sein. Die genannten Ausgestaltungsmöglichkeiten erschöpfen sich jedoch nicht, sie sollen lediglich als Beispiele verstanden werden.

Neben dem Querschnitt der Schiene 18, an dem sich auch die Form der Führungsschlitten 32 orientieren muss, kann auch die Art der Führung 18, 32 sehr unterschiedlich ausgestalten sein. Neben klassischen Gleitführungen können auch sogenannten Kugelumlaufführungen verwendet werden, wobei der Kugelumlauf dabei stets in den Führungsschlitten 32 vorgesehen ist. Diese haben den Vorteil, extrem steif ausgeführt werden zu können und dabei deutlich geringere Reib- bzw. Widerstandswerte aufzuweisen als klassische Gleitführungen.

Ferner kann der Trägerabschnitt 30 einen Schlittenabschnitt 31 aufweisen, mit dem die vertikal geführte Bearbeitungseinheit 10 entlang einer horizontalen Richtung verfahren werden kann. Der Schlittenabschnitt 31 kann ferner als eine Tragstruktur für die Führungsschienen 18 oder aber als Tragstruktur für die Führungsschlitten 32 verwendet werden und dabei auch Antriebe 21 und Getriebe 22 sowohl für die vertikale Positionierung der Bearbeitungseinheit 10 als auch Antriebe und Getriebe für die horizontale Positionierung der Bearbeitungseinheit 10, wobei der Schlittenabschnitt 31 während der horizontalen Positionierung mit verfahren werden würde, aufweisen.

Fig. 6a zeigt schematisch den Wirkpunkt 12 der Aufhängung 11, wenn der Antriebsmechanismus 20 über ein Getriebe 22 (hier Gewindetrieb) verfügt. Hierdurch befindet sich der Wirkpunkt 12 der Aufhängung 11 direkt in dem Gewindetrieb (Gewindestange), so dass der Schwerpunkt 101 der Bearbeitungseinheit 10 vorteilhafterweise entweder direkt in den Wirkpunkt 12 gelegt ist, oder aber zumindest auf der vertikal orientierten Geradenlinie 23 (in Fig. 6a nicht gezeigt, siehe hierzu Fig. 5) liegt. Durch die vertikale Positionierung der Bearbeitungseinheit 10 wird der Schwerpunkt 101 der Bearbeitungseinheit 10 entlang der vertikal orientierten Geradenlinie 23 geführt und erzeugt somit entweder ein konstantes oder ein vernachlässigbar geringes Drehmoment in den entsprechenden Führungen (z.B. Führung 18, 32) der Werkzeugmaschine 100.

Fig. 6b zeigt schematisch den Wirkpunkt 12 der Aufhängung 11, wenn der Antriebsmechanismus 20 über zwei Getriebe 22 (hier zwei Gewindetriebe) verfügt. Hierdurch befindet sich der Wirkpunkt 12 der Aufhängung 11 im Wesentlichen in der Mitte der zwei Aufhängungen 11 (mit ihren Aufhängungspunkten, die sich im Wesentlichen in der Mitte der Gewindestange befinden), so dass der Wirkpunkt 12 im Wesentlichen den gleichen Abstand (L1 = L2) zu den Aufhängungen 11 aufweist. Aufgrund dessen kann der Schwerpunkt 101 der Bearbeitungseinheit 10 vorteilhafterweise entweder direkt in den Wirkpunkt 12 gelegt werden, oder aber zumindest auf der vertikal orientierten Geradenlinie 23 (in Fig. 6b nicht gezeigt, siehe hierzu Fig. 5) liegen. Auch kann hier durch die vertikale Positionierung der Bearbeitungseinheit 10 der Schwerpunkt 101 der Bearbeitungseinheit 10 entlang der vertikal orientierten Geradenlinie 23 geführt werden und erzeugt dadurch auch entweder ein konstantes oder ein vernachlässigbar geringes Drehmoment in den entsprechenden Führungen (z.B. Führung 18, 32) der Werkzeugmaschine 100.

Fig. 6c zeigt schematisch den Wirkpunkt 12 der Aufhängung 11, wenn der Antriebsmechanismus 20 über drei Getriebe 22 (hier Gewindetriebe) verfügt. Hierdurch befindet sich der Wirkpunkt 12 der Aufhängung 11 im Wesentlichen in der Mitte der räumlichen Verteilung der drei Aufhängungen 11 (mit ihren Aufhängungspunkten, die sich im Wesentlichen in der Mitte der Gewindestange befinden), so dass der Wirkpunkt 12 im Wesentlichen den gleichen Abstand (L1 = L2 =L3) zu den Aufhängungen 11 aufweist. Aufgrund dessen kann der Schwerpunkt 101 der Bearbeitungseinheit 10 vorteilhafterweise entweder direkt in den Wirkpunkt 12 gelegt werden, oder aber zumindest auf der vertikal orientierten Geradenlinie 23 (in Fig. 6b nicht gezeigt, siehe hierzu Fig. 5) liegen. Auch kann an dieser Stelle wieder der Schwerpunkt 101 der Bearbeitungseinheit 10, durch die vertikale Positionierung der Bearbeitungseinheit 10, entlang der vertikal orientierten Geradenlinie 23 geführt werden und erzeugt auch hier entweder ein konstantes oder ein vernachlässigbar geringes Drehmoment in den entsprechenden Führungen (z.B. Führung 18, 32) der Werkzeugmaschine 100.

Die Lage des Wirkpunktes 12 bei einer Ausführung des Antriebsmechanismus 20 mit einer Zahnrad-Zahnstangen-Kombination würde sich, im Hinblick auf die in den Figuren 6a bis 6c gezeigte Lage des Wirkpunktes 12 bei einem Gewindetrieb, vergleichbar darstellen. Das bedeutet, dass bei einer Zahnstange und einem Zahnrad der Wirkpunkt 12 der Aufhängung 11 direkt am Kontaktpunkt von Wälzkreis des Zahnrades und Wälzgerade der Zahnstange liegen würde (vergleiche hierzu Fig. 6a und entsprechende Beschreibung), dass bei zwei Zahnstangen und entsprechend zwei Zahnrädern der Wirkpunkt 12 der Aufhängung 11 im Wesentlichen in der Mitte (L1 = L2) der Kontaktpunkte von Wälzkreis der Zahnräder und Wälzgerade der Zahnstangen liegen würde (vergleiche hierzu Fig. 6b und entsprechende Beschreibung), und dass bei drei Zahnstangen und entsprechend drei Zahnrädern der Wirkpunkt 12 der Aufhängung 11 im Wesentlichen in der Mitte (L1 = L2 = L3) der räumlichen Verteilung der Kontaktpunkte von Wälzkreis der Zahnräder und Wälzgerade der Zahnstangen liegen (vergleiche hierzu Fig. 6c und entsprechende Beschreibung) und somit entweder ein konstantes oder ein vernachlässigbar geringes Drehmoment in den entsprechenden Führungen (z.B. Führung 18, 32) der Werkzeugmaschine 100 erzeugen würde.

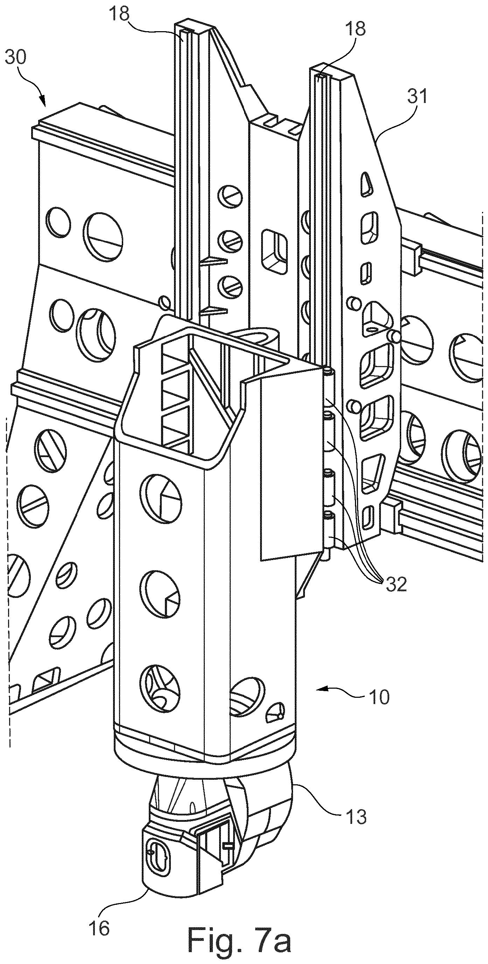

Fig. 7a zeigt schematisch eine Ausführungsform der erfindungsgemäßen Werkzeugmaschine 100 mit geänderter Anordnung der vertikalen Führung 18, 32. Dabei ist in Fig. 7a der Antriebsmechanismus 20 mit einem Antrieb 21 und einem Getriebe 22 nicht gezeigt, um die Ausgestaltung der geänderten, vertikalen Führung 18, 32 etwas besser erkennen zu können.

Die Führung 18, 32 wurde dahingehend geändert, dass nun die Führungsschlitten 32 an der Bearbeitungseinheit 10 befestigt sind, so dass diese bei einer vertikalen Positionierung der Bearbeitungseinheit 10 mit verfahren werden. Die Führungsschienen 18 sind daher entsprechend an dem Trägerabschnitt 30 oder an dem Schlittenabschnitt 31 befestigt.

Bei einer solchen Ausgestaltung der Führung 18, 32 liegt der Vorteil darin, dass der vertikale Abstand der in dem Spindelträger 13 gehaltenen Arbeitsspindel 16 bzw. einem von der Arbeitsspindel 16 aufgenommenen Werkzeug immer konstant zu den Führungsschlitten 32 ist, so dass diese in einer beliebigen Position der Bearbeitungseinheit 10 wie Stützpunkte funktionieren. Entstehen nun am Werkzeug Kräfte, die z.B. in horizontaler Richtung wirken, so verhält sich die Bearbeitungseinheit 10 wie eine sich verformende Struktur, die durch die Stützpunkte (hier die Führungsschlitten 32) fest mit dem Trägerabschnitt 30 oder dem Schlittenabschnitt 31 verbunden ist.

Vorteilhafterweise kann nun, bei bekannten Kräften, die z.B. auf das Werkzeug wirken, und bei bekannten Strukturverhältnissen der Bearbeitungseinheit 10, das Steifigkeitsverhalten der Bearbeitungseinheit 10 sehr gut vorhergesagt werden. Da die Stützpunkte (Führungsschlitten 32) in Relation zur Bearbeitungseinheit 10 immer die gleiche Position aufweisen, ist das Steifigkeitsverhalten der Bearbeitungseinheit 10 in allen vertikalen Positionen der Bearbeitungseinheit 10 zum Trägerabschnitt 30/Schlittenabschnitt 31 konstant, da keine Änderung des Abstandes von der Arbeitsspindel 10 bzw. des in der Arbeitsspindel 10 aufgenommenen Werkzeugs zu den Stützpunkten (Führungsschlitten 32) erfolgt. Dies ermöglicht nun eine sehr präzise Korrektur der numerisch gesteuerten Achsen, unabhängig von der vertikalen Positionierung der Bearbeitungseinheit 10.

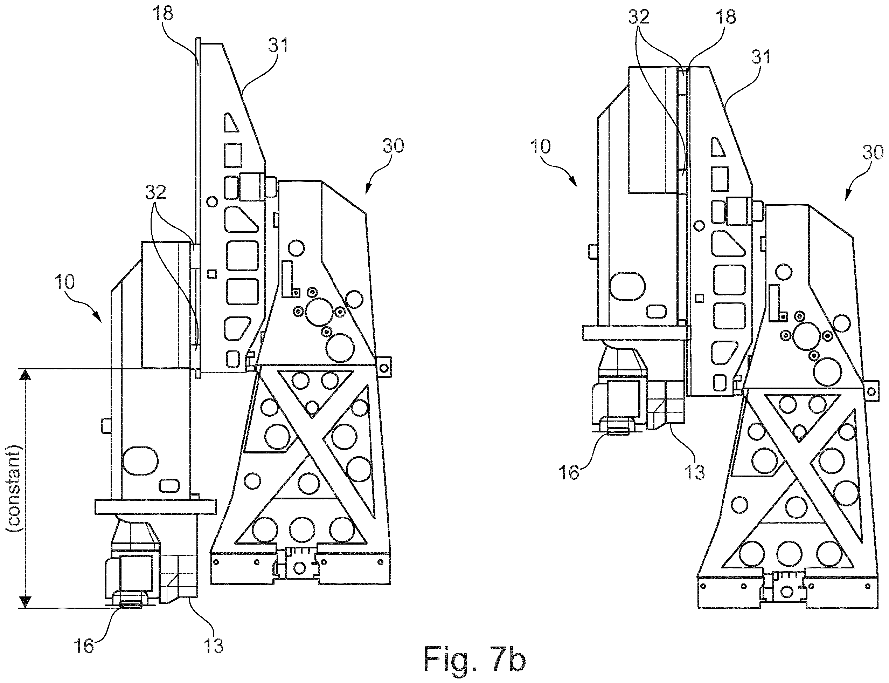

Fig. 7b zeigt schematisch eine Ausführungsform der erfindungsgemäßen Werkzeugmaschine 100 mit geänderter Anordnung der vertikalen Führung 18, 32 in der Seitenansicht. Dabei ist auch in Fig. 7b der Antriebsmechanismus 20 mit einem Antrieb 21 und einem Getriebe 22 nicht gezeigt, um die Ausgestaltung der geänderten, vertikalen Führung 18, 32 etwas besser erkennen zu können.

Zusätzlich ist, im Vergleich zu Fig. 7a, in Fig. 7b die Bearbeitungseinheit 10 in zwei verschiedenen, vertikalen Positionen gezeigt, wobei in der linken Darstellung die Bearbeitungseinheit 10 an einer vertikal unteren Position zu sehen ist und in der rechten Darstellung die Bearbeitungseinheit 10 in einer vertikal oberen Position zu sehen ist.

Beim Vergleich der beiden Darstellung kann man erkennen, wie die Führungsschlitten 32 der Bearbeitungseinheit 10 in ihrer jeweiligen vertikalen Position folgen und dadurch der Abstand der Arbeitsspindel 16 bzw. eines in der Arbeitsspindel 16 aufgenommenen Werkzeugs zu den Führungsschlitten 32 stets konstant ist. Dies führt zu dem, wie bereits weiter oben beschrieben, immer gleichen Steifigkeitsverhalten bei bekannten Kräften, unabhängig von der vertikalen Position der Bearbeitungseinheit 10.

### LISTE DER BEZUGSZEICHEN

- 10: Bearbeitungseinheit
- 11: Aufhängung
- 12: Wirkpunkt der Aufhängung
- 13: Spindelträger
- 14: Schwenkvorrichtung
- 15: schwenkbarer Abschnitt des Spindelträgers
- 16: Arbeitsspindel
- 17: Schwenkachse
- 18: Führungsschiene (Z-Führungen)
- 20: Antriebsmechanismus
- 21: Antrieb (Z-Antrieb)
- 22: Getriebe (Gewindestangen)
- 23: vertikal orientierte Geradenlinie
- 30: Trägerabschnitt
- 31: Schlittenabschnitt
- 32: Führungsschlitten
- 50: Aufhängungsabschnitt
- 60: Portalabschnitt
- 61: Führungen (Y-Führungen)
- 62: Gewindestange
- 63: Y-Antrieb
- 70: Maschinenbett
- 71: Führungen (X-Führungen)
- 72: Gewindestangen
- 73: X-Antrieb
- 80: Werkstückeinspanntisch
- 100: Werkzeugmaschine
- 101: Schwerpunkt der Bearbeitungseinheit

## Patentansprüche

1. Werkzeugmaschine (100) zur Bearbeitung eines Werkstücks, mit:
- einem Trägerabschnitt (30), an dem zumindest eine vertikale Führung (18, 32) angeordnet ist,
- einer an der zumindest einen vertikalen Führung (18, 32) des Trägerabschnitts (30) vertikal beweglich geführten Bearbeitungseinheit (10) zur Bearbeitung eines Werkstücks an der Werkzeugmaschine (100),
- einem zumindest zwei Antriebe (21) und zumindest zwei Getriebe (22) aufweisenden Antriebsmechanismus (20), der dazu eingerichtet ist, ein Verfahren der Bearbeitungseinheit (10) in vertikaler Richtung entlang der zumindest einen vertikalen Führung (18, 32) des Trägerabschnitts (30) anzutreiben,
wobei die Bearbeitungseinheit (10) an einem oder mehreren Getriebeabschnitten der zumindest zwei Getriebe (22) des Antriebmechanismus (20) derart aufgehängt ist, dass der Schwerpunkt (101) der Bearbeitungseinheit (10) mit einem im Wesentlichen in der Mitte von Einzelaufhängungen der Aufhängung (11) angeordneten Wirkpunkt (12) der Aufhängung (11) der Bearbeitungseinheit (10) an dem Antriebsmechanismus (20) in einer gemeinsamen vertikal orientierten Geradenlinie (23) angeordnet ist,
**dadurch gekennzeichnet, dass**
der Antriebsmechanismus (20) derart angeordnet ist, dass der Antriebsmechanismus während des Verfahrens der Bearbeitungseinheit (10) seine relative Lage zur Bearbeitungseinheit (10) beibehält und die relative Lage des Wirkpunktes (12) der Aufhängung (11) zu dem Trägerabschnitt (30) im Wesentlichen konstant bleibt.

2. Werkzeugmaschine (100) nach Anspruch 1, **dadurch gekennzeichnet, dass**
die Bearbeitungseinheit (10) derart an den einen oder mehreren Getriebeabschnitten der zumindest zwei Getriebe (22) des Antriebmechanismus (20) aufgehängt ist, dass während des Verfahrens in vertikaler Richtung auf den Trägerabschnitt (30) ein konstantes Drehmoment wirkt.

3. Werkzeugmaschine (100) nach Anspruch 1 oder 2, **dadurch gekennzeichnet, dass**
die Bearbeitungseinheit (10) derart an den einen oder mehreren Getriebeabschnitten der zumindest zwei Getriebe (22) des Antriebmechanismus (20) aufgehängt ist, dass während des Verfahrens in vertikaler Richtung auf die zumindest eine vertikale Führung (18, 32) des Trägerabschnitts (30) im Wesentlichen kein Drehmoment wirkt.

4. Werkzeugmaschine (100) nach einem der vorstehenden Ansprüche, **dadurch gekennzeichnet, dass**
während des Verfahrens der Bearbeitungseinheit (10) in vertikaler Richtung der Wirkpunkt (12) der Aufhängung (11) und/oder der Schwerpunkt (101) der Bearbeitungseinheit (10) sich entlang der vertikal orientierten Geradenlinie (23) bewegen.

5. Werkzeugmaschine (100) nach einem der vorstehenden Ansprüche, **dadurch gekennzeichnet, dass**
der Antriebsmechanismus (20) als selbst-sperrender Antriebsmechanismus ausgebildet ist, und
der Antriebsmechanismus (20) zumindest einen Gewindetrieb, vorzugsweise zumindest einen Kugelgewindetrieb umfasst, und
bei einem Getriebe (22) die zumindest eine vertikale Führung (18, 32) der Bearbeitungseinheit (10) derart angeordnet ist, dass der Schwerpunkt (101) der Bearbeitungseinheit (10) beim Verfahren der Bearbeitungseinheit (10) in vertikaler Richtung im Wesentlichen konzentrisch zu einer Gewindestange des Gewindetriebes verschoben wird, insbesondere entlang der vertikal orientierten Geradenlinie (23), und
die Gewindestange axial mit der vertikal orientierten Geradenlinie (23) angeordnet ist.

6. Werkzeugmaschine (100) nach Anspruch 4, **dadurch gekennzeichnet, dass**
der Antriebsmechanismus (20) zumindest eine Zahnrad-Zahnstangen-Kombination, vorzugsweise zumindest eine schrägverzahnte Zahnrad-Zahnstangen-Kombination umfasst, und
bei einem Getriebe (22) die zumindest eine vertikale Führung (18, 32) der Bearbeitungseinheit (10) derart angeordnet ist, dass der Schwerpunkt (101) der Bearbeitungseinheit (10) beim Verfahren der Bearbeitungseinheit (10) in vertikaler Richtung im Wesentlichen am Kontaktpunkt von Wälzkreis des Zahnrades und Wälzgerade der Zahnstange geführt wird.

7. Werkzeugmaschine (100) nach einem der vorstehenden Ansprüche, **dadurch gekennzeichnet, dass**
die Bearbeitungseinheit (10) einen eine Arbeitsspindel (16) tragenden Spindelträger (13) umfasst, und
der Spindelträger (13) eine Schwenkvorrichtung (14) zum Schwenken der Arbeitsspindel (16) um eine Schwenkachse (17) umfasst, und
die Schwenkachse (17) senkrecht oder schräg, vorzugsweise im 45 °-Winkel, zu einer Spindelachse der Arbeitsspindel (16) angeordnet ist.

8. Werkzeugmaschine (100) nach Anspruch 7, **dadurch gekennzeichnet, dass**
ein die Arbeitsspindel (16) haltender, schwenkbarer Abschnitt (15) des Spindelträgers (13), mit dem die Arbeitsspindel (16) um die Schwenkachse (17) schwenkbar ist, derart angeordnet ist, dass ein gemeinsamer Schwerpunkt des schwenkbaren Abschnitts (15) und der Arbeitsspindel (16) im Schnittpunkt von der Schwenkachse (17) und der vertikal orientierten Geradenlinie (23) liegt.

9. Werkzeugmaschine (100) nach einem der vorstehenden Ansprüche, **dadurch gekennzeichnet, dass**
der Trägerabschnitt (30) als ein auf einem Maschinenbett (70) angeordneter Maschinenständer ausgebildet ist.

10. Werkzeugmaschine (100) nach einem der Ansprüche 1 bis 8, **dadurch gekennzeichnet, dass**
der Trägerabschnitt (30) einen horizontal verfahrbar gelagerten Schlittenabschnitt (31) umfasst, und
der Schlittenabschnitt (31) auf Führungen gelagert an einem horizontal verfahrbaren Portalaufbau einer Gantry-Werkzeugmaschine angeordnet ist.

## Claims

1. A machine tool (100) for machining a workpiece, comprising:
- a support portion (30) on which at least one vertical guide (18, 32) is disposed,
- a machining unit (10) for machining a workpiece on said machine tool (100), said machining unit (10) being guided so as to be vertically movable on the at least one vertical guide (18, 32) of said support portion (30),
- a drive mechanism (20) having at least two drives (21) and at least two gearboxes (22), said drive mechanism (20) being configured to drive a movement of said machining unit (10) in the vertical direction along the at least one vertical guide (18, 32) of said support portion (30),
wherein said machining unit (10) is suspended from one or a plurality of gearbox portions of the at least two gearboxes (22) of said drive mechanism (20) in such a manner that the center of gravity (101) of said machining unit (10) is disposed in a common vertically oriented straight line (23) together with a working point (12) of said suspension (11) of said machining unit (11) on said drive mechanism (20), said working point (12) being disposed substantially in the center of individual suspensions of said suspension (11),
**characterized in that**
said drive mechanism (20) is disposed in such a manner that said drive mechanism (20) maintains the position thereof relative to said machining unit (10) during the movement of said machining unit (10) and the position of the working point (12) of said suspension (11) relative to said support portion (30) remains substantially constant.

2. The machine tool (100) according to claim 1, **characterized in that**
said machining unit (10) is suspended from the one or the plurality of gearbox portions of the at least two gearboxes (22) of said drive mechanism (20) in such a manner that a constant torque acts on said support portion (30) during the movement in the vertical direction.

3. The machine tool (100) according to claim 1 or 2, **characterized in that**
said machining unit (10) is suspended from the one or the plurality of gearbox portions of the at least two gearboxes (22) of said drive mechanism (20) in such a manner that substantially no torque acts on the at least one vertical guide (18, 32) of said support portion (30) during the movement in the vertical direction.

4. The machine tool (100) according to one of the preceding claims, **characterized in that**
the working point (12) of said suspension (11) and/or the center of gravity (101) of said machining unit (10) move along the vertically oriented straight line (23) during the movement of said machining unit (10).

5. The machine tool (100) according to one of the preceding claims, **characterized in that**
said drive mechanism (20) is configured as a self-locking drive mechanism, and said drive mechanism (20) comprises at least one screw jack, preferably at least one ball screw jack, and
in a gearbox (22), the at least one vertical guide (18, 32) of said machining unit (10) is disposed in such a manner that the center of gravity (101) of said machining unit (10) is displaced in a manner substantially concentric with a threaded bar of the screw jack, in particular along the vertically oriented straight line (23), during the movement of said machining unit (10), and
the threaded bar is disposed so as to be axial to the vertically oriented straight line (23).

6. The machine tool (100) according to claim 4, **characterized in that**
said drive mechanism (20) comprises at least one gear-and-rack combination, preferably at least one helical-cut gear-and-rack combination, and
in a gearbox (22), the at least one vertical guide (18, 32) of said machining unit (10) is disposed in such a manner that the center of gravity (101) of the machining unit (10) is guided substantially at the contact point of the pitch circle of the gear wheel and the pitch line of the rack during the movement of said machining unit (10).

7. The machine tool (100) according to one of the preceding claims, **characterized in that**
said machining unit (10) comprises a spindle carrier (13) that supports a work spindle (16), and
said spindle carrier (13) comprises a pivot device (14) for pivoting said work spindle (16) about a pivot axis (17), and
said pivot axis (17) is disposed so as to be perpendicular or oblique, preferably at an angle of 45°, in relation to a spindle axis of said work spindle (16).

8. The machine tool (100) according to claim 7, **characterized in that**
a pivotable portion (15) of said spindle carrier (13) which holds said work spindle (16) and by way of which said work spindle (16) is pivotable about said pivot axis (17) is disposed in such a manner that a common center of gravity of said pivotable portion (15) and of said work spindle (16) is located at the intersection point of said pivot axis (17) and the vertically oriented straight line (23).

9. The machine tool (100) according to one of the preceding claims, **characterized in that**
said support portion (30) is configured as a machine stand that is disposed on a machine bed (70).

10. The machine tool (100) according to one of the claims 1 to 8, **characterized in that**
said support portion (30) comprises a slide portion (31) that is mounted so as to be horizontally movable, and
said slide portion (31) is disposed so as to be mounted on guides on a horizontally movable gantry structure of a gantry machine tool.

## Revendications

1. Machine-outil (100) pour l'usinage d'une pièce, avec :
- une partie de support (30), sur laquelle au moins un guidage vertical (18, 32) est disposé,
- une unité d'usinage (10) guidée mobile verticalement sur le au moins un guidage vertical (18, 32) de la partie de support (30) pour l'usinage d'une pièce sur la machine-outil (100),
- un mécanisme d'entraînement (20) présentant au moins deux entraînements (21) et au moins deux transmissions (22), qui est conçu pour entraîner un déplacement de l'unité d'usinage (10) dans la direction verticale le long du au moins un guidage vertical (18, 32) de la partie de support (30),
dans laquelle l'unité d'usinage (10) est suspendue sur une ou plusieurs parties de transmission des au moins deux transmissions (22) du mécanisme d'entraînement (20), de telle sorte que le centre de gravité (101) de l'unité d'usinage (10) est disposé avec un point d'action (12) de la suspension (11) de l'unité d'usinage (10) disposé sensiblement au centre de suspensions individuelles de la suspension (11) sur le mécanisme d'entraînement (20) dans une ligne droite (23) orientée verticalement commune,
**caractérisée en ce que**
le mécanisme d'entraînement (20) est disposé de telle sorte que le mécanisme d'entraînement pendant le déplacement de l'unité d'usinage (10) conserve sa position relative par rapport à l'unité d'usinage (10) et la position relative du point d'action (12) de la suspension (11) par rapport à la partie de support (30) reste sensiblement constante.

2. Machine-outil (100) selon la revendication 1, **caractérisée en ce que**
l'unité d'usinage (10) est suspendue sur les une ou plusieurs parties de transmission des au moins deux transmissions (22) du mécanisme d'entraînement (20), de telle sorte que pendant le déplacement dans la direction verticale un couple constant agit sur la partie de support (30).

3. Machine-outil (100) selon la revendication 1 ou 2, **caractérisée en ce que**
l'unité d'usinage (10) est suspendue sur les une ou plusieurs parties de transmission des au moins deux transmissions (22) du mécanisme d'entraînement (20) de telle sorte que pendant le déplacement dans la direction verticale aucun couple n'agit sensiblement sur le au moins un guidage vertical (18, 32) de la partie de support (30).

4. Machine-outil (100) selon l'une quelconque des revendications précédentes, **caractérisée en ce que**
pendant le déplacement de l'unité d'usinage (10) dans la direction verticale le point d'action (12) de la suspension (11) et/ou le centre de gravité (101) de l'unité d'usinage (10) se déplacent le long de la ligne droite (23) orientée verticalement.

5. Machine-outil (100) selon l'une quelconque des revendications précédentes, **caractérisée en ce que**
le mécanisme d'entraînement (20) est réalisé sous la forme d'un mécanisme d'entraînement autobloquant, et
le mécanisme d'entraînement (20) comprend au moins un système de vis-écrou, de préférence au moins un système de vis-écrou à billes, et
pour une transmission (22) le au moins un guidage vertical (18, 32) de l'unité d'usinage (10) est disposé de telle sorte que le centre de gravité (101) de l'unité d'usinage (10) lors du déplacement de l'unité d'usinage (10) dans la direction verticale est décalé de manière sensiblement concentrique par rapport à une tige filetée du système de vis-écrou, en particulier le long de la ligne droite (23) orientée verticalement, et
la tige filetée est disposée axialement avec la ligne droite (23) orientée verticalement.

6. Machine-outil (100) selon la revendication 4, **caractérisée en ce que**
le mécanisme d'entraînement (20) comprend au moins une combinaison de roue dentée-crémaillère, de préférence au moins une combinaison de roue dentée-crémaillère à denture hélicoïdale, et
pour une transmission (22) le au moins un guidage vertical (18, 32) de l'unité d'usinage (10) est disposé de telle sorte que le centre de gravité (101) de l'unité d'usinage (10) lors du déplacement de l'unité d'usinage (10) dans la direction verticale est guidé sensiblement sur le point de contact du cercle de roulement de la roue dentée et de la droite de roulement de la crémaillère.

7. Machine-outil (100) selon l'une quelconque des revendications précédentes, **caractérisée en ce que**
l'unité d'usinage (10) comprend un support de broche (13) portant une broche de travail (16), et
le support de broche (13) comprend un dispositif de pivotement (14) pour le pivotement de la broche de travail (16) autour d'un axe de pivotement (17), et
l'axe de pivotement (17) est disposé de manière perpendiculaire ou inclinée, de préférence à un angle de 45°, par rapport à un axe de broche de la broche de travail (16).

8. Machine-outil (100) selon la revendication 7, **caractérisée en ce que**
une partie pivotante (15) du support de broche (13) portant la broche de travail (16), avec laquelle la broche de travail (16) peut pivoter autour de l'axe de pivotement (17), est disposée de telle sorte qu'un centre de gravité commun de la partie pivotante (15) et de la broche de travail (16) se situe à l'intersection de l'axe de pivotement (17) et de la ligne droite (23) orientée verticalement.

9. Machine-outil (100) selon l'une quelconque des revendications précédentes, **caractérisée en ce que**
la partie de support (30) est réalisée sous la forme d'un bâti de machine disposé sur un socle de machine (70).

10. Machine-outil (100) selon l'une quelconque des revendications 1 à 8, **caractérisée en ce que**
la partie de support (30) comprend une partie formant chariot (31) montée de manière déplaçable horizontalement, et
la partie formant chariot (31) est disposée de manière montée sur des guidages sur une structure de portique déplaçable horizontalement d'une machine-outil à portique.
